Europäisches Patentamt

European Patent Office

Office européen des brevets

(11) Publication number: **0 118 308**
**A1**

## (12) EUROPEAN PATENT APPLICATION

(21) Application number: **84301449.9**

(22) Date of filing: **05.03.84**

(51) Int. Cl.³: **B 01 D 3/06**
**B 01 D 1/30, B 01 D 5/00**
**C 10 M 11/00**

(30) Priority: **03.03.83 GB 8305873**

(43) Date of publication of application:
**12.09.84 Bulletin 84/37**

(84) Designated Contracting States:
**AT BE CH DE FR GB IT LI LU NL SE**

(71) Applicant: **Oil Reclamation International Limited**
**71 Duke Street Mayfair**
**London W1M 5DH(GB)**

(72) Inventor: **Kipatsa, Kalevi**
**46 Inverness Terrace**
**London W2(GB)**

(74) Representative: **Clifford, Frederick Alan et al,**
**MARKS & CLERK 57/60 Lincoln's Inn Fields**
**London WC2A 3LS(GB)**

(54) Heat treatment of liquids.

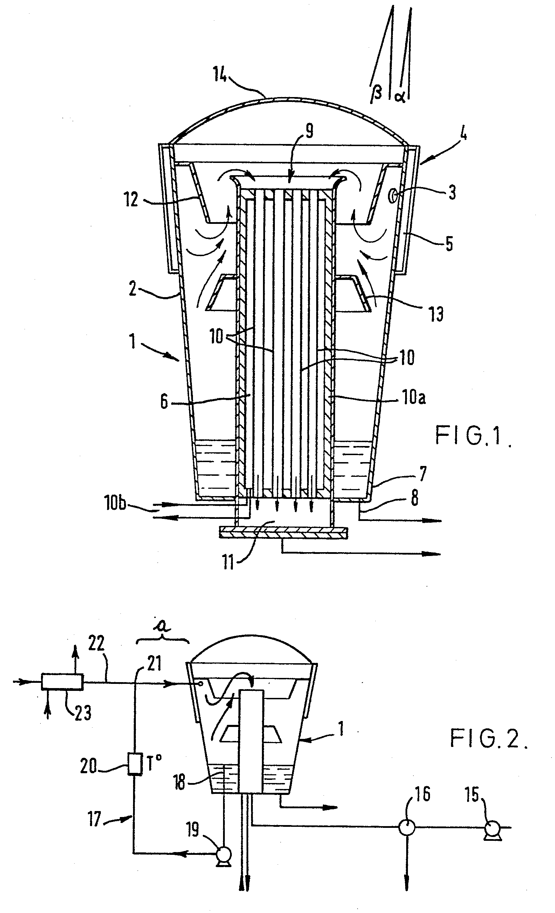

(57) A vacuum vessel (51, 1) with heating jacket (52, 5) around its upper part is fed at one or more nozzles (54, 3) with a coherent or atomised stream(s) of heated liquid e.g. waste oil which impinges generally tangentially on its inner surface. Flash evaporation takes place, together with further evaporation from the liquid running around and down the internal vessel wall to the pool of residual liquid in the base of the vessel (51, 1) Baffles (12, 13) shown in Figure 2, protect large axial vapour outlet (9) from carryout of liquid droplets. The vapour is condensed in large-diameter large-surface condenser (64, 6) connected to vacuum pump (67) for the system and liquid collects at (69, 11) Offtake pipe 55 recycles residual liquid to the nozzle as rapid preheat to new feed from 58.

FIG.1

EP 0 118 308 A1

./...

Croydon Printing Company Ltd.

FIG.7.

HEAT TREATMENT OF LIQUIDS

This invention relates to heat treatment of liquids to bring about evaporation of a single component, or a fraction comprising one or more components. In particular, it relates to a method which can handle viscous, corrosive, or heat-sensitive material, such as waste lubricating oils.

Industrial evaporation equipment is usually arranged for continuous operation with a large heat-exchange surface. Boiling of the solution is violent, and there is usually a rapid vapour evolution. Industrial evaporation thus encounters many problems, such as foaming, scaling, heat sensivity, corrosion, and space limitations.

One known form of industrial evaporator is the so-called long-tube vertical evaporator. This can be used with a falling film of liquid or with a rising film of liquid. It essentially comprises a set of vertical heat-exchange tubes to which (for use as a falling-film evaporator) liquid is fed at the top in order to fall down the tubes as a film on the walls. Vapour is evaporated, usually near the bottom of the tubes. The pressure drop through the tubes is usually very small, and the boiling-liquid temperature is substantially the same as the vapour-heat temperature. This type of evaporator is widely used for concentrating heat-sensitive materials, such as fruit juices, because hold-up time is very small, the liquid is not overheated during passage through the evaporator, and heat-transfer coefficients are high even at low boiling temperatures.

Flash evaporators are known in which heat-exchange tubes are used to heat the liquid to above its boiling point and give a super-heated liquor which is then flashed into a separator operating at reduced pressure. Flash evaporators are often used as a component of a multistage evaporator in, for example, the desalination of sea-water. A disadvantage of a flash evaporator, however, is that the liquid throughout the system is at almost the discharge concentration, which has limited its industrial use to solutions where no great concentration differences are required between feed and product. Also, it must be possible to heat the liquid through wide temperature ranges with scaling. An advantage of a flash evaporator however is that only a small number of pumps and moving parts are needed.

The present invention sets out to provide a method of evaporative heat treatment having some of the charactertistics of flash evaporation and some of evaporation in long tube vertical evaporators.

In one aspect the invention provides a method for the evaporative heat-treatment of a liquid in order to separate a single component or a fraction comprising one or more components, which comprises:-

(a) providing at least one heated stream of the liquid;

(b) feeding the or each heated stream so as to impinge as a coherent or atomised stream generally tangentially on a conical or cylindrical upper portion of an internal wall of a vessel held at reduced pressure, the said wall being at a controlled temperature, preferably at a temperature higher than that of the stream of liquid, whereby (i) flash evaporation of at least part of the liquid takes place on entry to the vessel and (ii) further evaporation takes place as the liquid runs around and down the conical or cylindrical portion;

(c) providing a baffled large-diameter axial outlet also at the upper portion of the vessel, into which at least the flash-evaporated vapour can force itself,

(d) condensing this vapour to the desired component within a large-diameter condenser system of consequentially large condensing surface area, and

(e) allowing residual liquid to flow downwards on the vessel walls to accumulate for removal from the bottom of the vessel.

The lower the pressure, i.e. the higher the vacuum, the cleaner and purer the condensate. Because of this vacuum condition contaminants are not entrained by a vapour flow to arrive in the condenser system.

In a preferred feature of the method, at least part of the residual liquid after removal from the bottom of the vessel is heated and thereafter used to preheat the or each stream of liquid entering the vessel. Because the volatile component has been removed it is possible to heat this residual liquid without problems of carbonisation or vaporisation, etc. It can be used for non-contacting heat-exchange, but most preferably is mixed with the feed material, advantageously in high proportion (70-95% by volume) and close to the or each inlet so that the feed is rapidly heated and avoids thermal decomposition. This can be achieved with a suitable design of nozzle member, such as to give good internal mixing and/or a rotary component to the combined liquids prior to ejection.

The residual liquid in the base of the vessel is advantageously largely recycled. Clearly, part of the liquid can be bled off (e.g. to the same, or a different subsequent stage) so that no undue accumulation of liquid occurs in the vessel, although a moderate "head" of such liquid actually helps to produce and maintain the required low pressure in the vessel. Th existence of such a body of liquid also permits a self-regulating flow of pre-heat liquid; if the level should fall, less is taken out, less pre-heat is achieved and less vapour is evaporated so that the residual liquid level rises. This can be done, without moving parts, by a simple vertical supply pipe, perforated at intervals along its upper part, so as to control the liquid level. Such a pipe can advantageously be located in a surrounding pot, so that the "feedback" of information about undesired liquid level is accelerated, as described in more detail below.

The vapour forces itself out through an axial outlet near the top of the vessel, for condensation. This is because the suddenly generated high volume of vapour needs to expand within the low-pressure environment. In one preferred form, the vapour thereafter moves downwards, through a thermally insulated internal condenser system, so as to be removed from the foot of the vessel (through a separate duct from that for residual or pre-heat liquid). However, the vapour could also continue to expand upwards through the top of the vessel to an external condenser, this being easier to fabricate and operate but harder to maintain at a good vacuum. Morever, a combination of (a) partial condensation in an internal and thermally insulated condenser e.g. with minimal cooling, or even with no applied cooling and mere accumulation of entrained droplets in a cyclone or by baffles with (b) external condensation of remaining vapour is also possible. With all these condenser systems care must be taken not to constrict unduly the vacuum line by which the vessel is held at reduced pressure (typically 1 -10 mm Hg), and the use of a large outlet and large diameter condensing systems and connecting lines is essential in the practice of the invention. The large diameter of the condensing system consequentially gives a useful large condensing surface area.

There can be two, three or four tangential streams of entering liquid. The upper portion of the walls can be heated, e.g. electrically heated or steam jacketed. The vessel, in preferred embodiments, is conical in its upper portion at least; the lower portion can then be a continuation of this cone or can be cylindrical. However, various shapes and configurations of such vessels can be used.

The baffles are provided so that the violent flash evaporation on entry, which produces a large volume of vapour forcing itself into the outlet, does not cause droplets to enter the condenser system. These baffles can take the form of a conical skirt around the internal top of the vessel; if so, the skirt cone angle is greater than the wall conical angle, so that there is no effective constriction from the entrance of the liquid, but only directional change of the vapour stream.

Although the invention has been defined in terms of the method described above, it also extends to an assembly of equipment for carrying out this method, and especially to the vessel in which the evaporation step is carried out.

The invention will now be described by way of example with reference to the accompanying drawings, in which:-

Figure 1 shows schematically an evaporator for carrying out an evaporative heat treatment according to the invention;

Figure 2 shows schematically a flow sheet of the method using the evaporator shown in Figure 1;

Figure 3 shows schematically a flow sheet of a method of operating an evaporator modified from that shown in Figure 1.

Figure 4 shows a detail of an evaporator as used in Figure 3;

Figure 5 shows a different design of vessel embodying the feature of the invention;

Figure 6 shows an injection nozzle,

Figure 7 shows layout of a plant mounted on a movable frame;

Figure 8 shows a detail of an alternative liquid trap, and

Figure 9 is a flow diagram of a recovery system for waste oil capable of removing water and recovering a free fraction and a lubricating fraction.

Figure 1 shows an evaporator 1 comprising a conical vessel 2, with a single tangential inlet 3, through which viscous, corrosive, or heat-sensitive material (such as waste lubricating oils or fruit juices) can be fed into the evaporator. The tangential inlet 3 is located in a top portion of the vessel which has heating means 4 comprising a heating jacket 5 of electrical heating elements operated by a high frequency current wound around the outside of the end portions. (It is also possible to use a steam jacket).

A condenser 6 is arranged within and coaxial with the vessel 2. The condenser extends from near the top to the bottom 7 of the vessel. The bottom has a vessel outlet 8.

The condenser 6 has an inlet 9 near the top of the vessel and comprises a plurality of vertical heat-exchange tubes 10 within a thermally insulating wall 10a, defining a jacket supplied with water 10b. The total area of tubes 10 in cross-section defines a large-diameter condensing system and the combined surface areas of the pipes gives a large condensing surface area. Outlet 11 communicates with the exterior of the vessel at the bottom, adjacent the vessel outlet 8.

A collar or skirt baffle 12 is located between the tangential inlet 3 and the condenser inlet 9. This baffle prevents short-circuting of feed entering the vessel from the tangential inlet 3 to the condenser inlet 9, before all the feed has been sufficiently vaporised. There is also a baffle 13 intermediate the condenser inlet and condenser outlet and circumferentially arranged around the condenser, the baffle preventing waste material and/or liquid which has not been vaporised from combining with feed entering through the tangential inlet.

The vessel has a dome-shaped roof 14; other shapes are possible provided that the large-diameter entry to the condenser is not constricted. The condenser 6 is connected to a vacuum pump (not shown) outside the vessel 2.

Figure 2 shows the vessel 1, with those component parts readily identifiable from Figure 1 not separately identified, in an operating system. In this system is provided vacuum pump 15 and two-way valve 16, it being understood that the connecting lines are of that dimension and lack of constriction necessary for application of a good vacuum. A preheating recycle system for residual liquid is shown at 17, and comprises a vertical pipe inlet 18 inside the vessel, pump 19, heater 20, and junction 21 (usually part of nozzle, as described below). There is a supply line 22 and preliminary heater 23 for the feed.

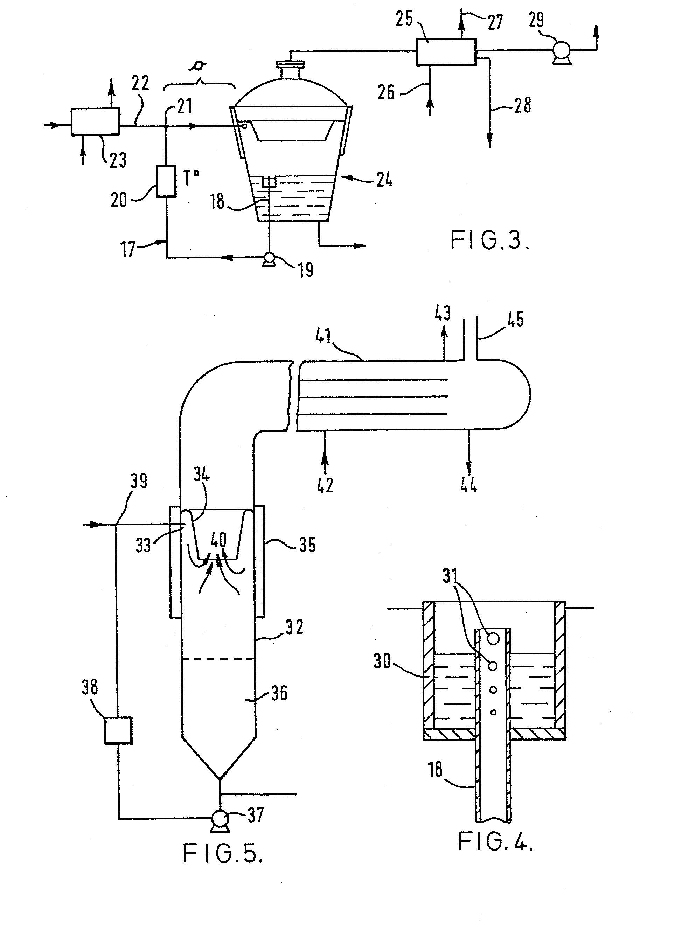

Figure 3 shows a vessel 24, modified from vessel 1, but used in a similar system to that of Figure 2. The modification as between vessel 24 and vessel 1 is to use, instead of internal condenser 6, an external vapour condenser 25, with cooling water inlet 26 and outlet 27 to yield condensed product at 28, with application of vacuum at pump 29.

Figure 3 also shows diagrammatically a detail of the entry pipe 18, which is shown on a larger scale inb Figure 4. At its upper end it is surrounded by pot 30, and possesses a number of perforations 31 in its wall, fed from the liquid in the pot. The perforations 31 grow smaller towards the bottom of the pot.

The method of operating the system of Figure 2 will now be described with reference to the treatment of waste lubricating oil.

A vacuum is established and maintained by pump 15, and heating elements 5 are switched on. A supply of waste lubricating oil is passed into preliminary heater 23, and pumped along line 22 to enter the vessel 1 and impinge tangentially on the heated internal surface. As it enters the vessel flash vaporisation takes place and a vortex is set up of the high volume of vapour produced, due to the tangential velocity component. This throws the remaining liquid against the heated conical walls, where it runs down and around to the bottom at 7, producing a vapour component due to the temperature of the walls. This high volume of vapour, and that produced by flash evaporation, jointly force themselves into the condenser 6 and are condensed on the walls of vertical tubes 10 substantially entirely to a liquid material (possibly with a very minor amount of uncondensed vapour). The condensed liquid is separated as a product at valve 16, and any vapour component remaining is exhausted through pump 15 in order to maintain the vacuum.

The residual liquid at 7 of temperature $290^{\circ}C$ – $300^{\circ}C$ builds up until pipe 18 is covered with liquid. At this stage, pump 19 is started to convey recyled residual liquid to heater 20. At this point it is heated to say 360°C. It passes to junction point 21.As much as 90% of the liquid fed into the vessel can be this recycled liquid, and judicious choice of distance "a" and temperature $T^O$ can ensure rapid heating to the desired extent for any particular feed without decomposition and its attendant problems.

The fresh feed entering via preliminary heater 23 partly evaporates and partly remains at residual liquid. Thus, the level of such liquid always rises, and a steady or intermittent take-off at 8 is thus necessary. If this causes the level to fall pipe 18 does not extract residual liquid (or does so only to a lesser extent) so that there is less preheat, less evaporation, and more residual liquid causing the level to rise again.

The system according to Figure 3 is operated in essentially the same manner, except that the condenser is outside the vessel.Combined condenser systems, part inside and part outside, are also possible, although in every case the condenser inlet is of large axial diameter, and at or near the top of the vessel so as to be relatively near the inlet.

The system operates more sensitively using the modified preheat recycle intake as shown in Figure 4. If the vessel liquid level falls, pot 30 is not replenished. It soon empties, and less preheat is given to the feed; the level therefore rises again filling the pot 30. However, this compensation is carried out in a cycle which only involves the volume of the pot, and not the whole volume of the vessel between the top of pipe 18 and the lower perforation.

Some liquids are very sensitive to overheating or heating for long periods. It is possible with the method as described to vaporise liquids with a minimum heating time. Waste lubricating oil has a tendency to coke or foul, and thus should not be heated for long periods.Because of the low heat required for vaporisation of hydrocarbons within the waste lubricating oil, a liquid pressure at the inlet to the evaporator can be maintained at a pressure of between 1 and 4 $Kg/cm^2$.

The pressure-reducing means, for example vacuum pump 15 is needed so that the vapour evolved forces itself immediately into the outlet i.e. so as to minimise gas interaction inside the vessel. The vacuum reduces the temperature which is needed for vaporisation.

It is essential with waste lubricating oil that there is no air (i.e. oxygen or substantially no oxygen) in the vessel at the high temperatures involved since there is otherwise a danger that the waste lubricating oil could

14

ignite and the vessel explode.

It is possible to adjust the recycle ratio, so that, for example 10% of the recycle material can be passed to outlet 8 whilst the remaining 90% of the recycle material is passed to the heater 20 prior to joining the inlet feed waste lubricating oils.

The condenser is so arranged within the vessel that the distance between the regions of flash vaporisation of feed on entry and vaporisation of the liquid film on the wall, and the condenser inlet 9 is small. In this way, since the distance between vaporisation of the feed and the condensation of desire products is minimised, a maximum vacuum can be maintained. As can be seen from Figure 1, the skirt or baffle 12 is downwardly pointing relative to the roof 14 of the vessel. Therefore, materials which have been vaporised from the inlet feed have to pass downwards initially before rising back up from the vessel to enter the condenser inlet. The baffle prevents the inlet feed from passing directly into the condenser inlet. The collar has an angle of slope $\beta$ larger than that angle $\alpha$ of the conical surface which permits the expanding vapour from the heated region adjacent the tangential inlet to pass readily from the internal surface 15 of the evaporator to the condenser 6.

An advantage of the evaporator of the invention is that it is possible to obtain high vaporisation yields from mixtures of viscous, corrosive or heat-sensitive materials, such as waste lubricating oils. The evaporator has no moving parts and is therefore easy and in expensive to fabricate and maintain.

The evaporator of the invention can be used in a variety of applications in addition to the reclaiming of lubricating oils. One such application is for use in concentrating fruit juices. Another application is for use in solvent recovery during paint manufacture. Even desalination can be carried out using the method as described.

The vessel need not however be embodied as shown in Figures 1 or 3. Figure 5 shows diagrammatically a vertical tube 32 with the necessary tangential inlet 33 inside conical baffle 34 surrounded by heating jacket 35. Residual liquid accumulates at 36, and is recycled, heated and combined with fresh feed by pumps 37, heater 38 and mixing junction 39, as described above. Vapour forces itself around the baffle, upwards through the tube 40, and into large-diameter condenser shown diagrammatically at 41, with water inlet and outlet 42,43 respectively and product outlet 44, the whole system being kept under vacuum by vacuum line 45.

While the equipment can be embodied in a range of sizes, it will be found possible to operate with the equipment as shown in Figure 4 of an overal height of about one metre, an internal diameter of about ten centimetres, and an inlet about 70cm. from the base.

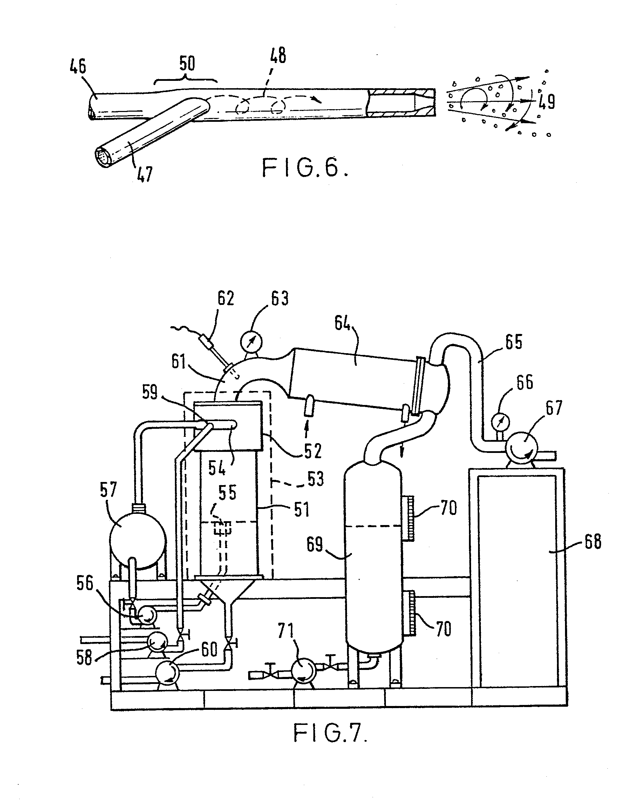

Figure 6 shows a design of injection nozzle. Recirculated liquid (e.g. line 17 of Figure 1) enters at 46, and preheated new feed enters at an angle of 47 so as to impart a rotary movement 48 to assist in combining the two streams and consequent rapid heating. The combined streams preferably enter the vessel as an atomised spray with droplet size from 100 to 1000 microns, the end of the nozzle being suitably shaped if this automisation is desired. The combined heated liquid emerges at 49 as a somewhat diverting spray because of this rotary component. This assists flash evaporation.

By way of example, recirculating liquid inlet portion 46 can be 16 mm internal diameter, and new feed inlet 13 mm internal diameter. At the region 50 of joining, the internal diameter can be correspondingly enlarged to accommodate the combined streams, and taper at e.g. $5^{\circ}$ to the nozzle outlet. Recirculating liquid at $371^{\circ}$ and new feed at $285^{\circ}C$ are thereby efficiently combined in say 0.5 seconds to an outlet stream at $343^{\circ}C$.

Figure 7 shows an external view of a typical plant layout for a skid-mounted unit of e.g. 2.5m overall length. It shows reactor vessel 51 (i.e. vessel 1, 24 or 32) surrounded by thermal insulation 52 and a heating jacket at 53 around the inlet 54 for liquid to be treated. The internal baffles are not shown. Recycling of residual liquid is effected by take-off trap 55, pump 56 and heater 57. Feed of new liquid is pumped in at 58 to combine with recycled liquid at 59. Take-off of residual liquid is by pump 60.

Large-diameter outlet 61, provided with temperature sensor 62 and pressure gauge 63 feeds large-diameter condenser 64, connected by large-diameter vacuum line 64, connected by large-diameter vacuum line 65 (provided with pressure gauge 66) to vacuum pump 67. If desired a liquid trap can be provided to accumulate residual condensed vapour and protect this pump 67. Electrical control console 68 is provided with switches and read-outs for the various pumps and sensors.

Liquid from condenser 64 is accumulated in receiver 69, with sight glasses 70 for removal by pump 71 as required.

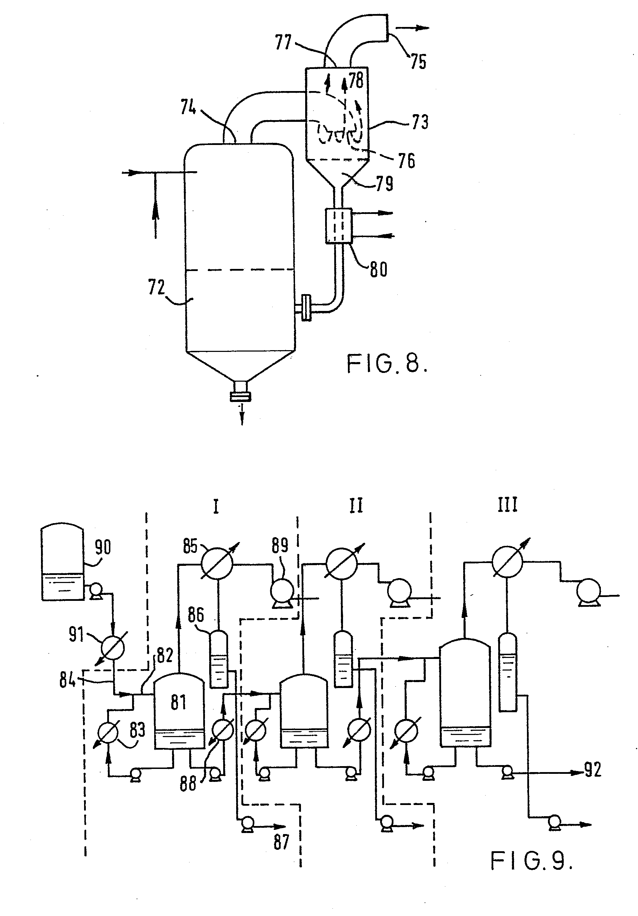

Figure 8 shows an optional liquid-trap feature which can be incorporated into the system. Vessel 72 (e.g. as vessel 1, 24, 32 or 51) has a trap 73 interposed between vessel vapour outlet 74 and condenser inlet 75. The trap 73 has a downwardly directed large-diameter inlet 76 and a large-diameter outlet 77. Vapour follows the path 78, shown by dotted lines. Entrained liquid droplets, higher-molecular weight species or particulate solids e.g. dust impinge on and add to the liquid accumulation 79, which is recycled to the vessel 72 via heater 80.

Figure 9 shows a three-stage treatment process, each stage being embodied according to the present invention.

Each stage I, II or III comprises a treatment vessel 81, fed by a joint feed at 82 of recycle liquid heated at 83, and fresh feed (for that stage) at 84. Vapour condenses in condenser 85 to a liquid received at 86 and available as product at 87.Non-recycled liquid is pumped forward via heater 88 to the next stage. Vacuum is maintained by pumps 89. An initial holding tank 90 provides initial feed via heater 91. For convenience, only one stage is numbered, the other being substantially identical.

For example, used oil at 90 can be subjected to a "dehydration" stage I, whereby water is removed at 87-I, a "fractionation" stage II whereby fuel oil is removed at 87-II, and a "distillation" stage III whereby a lubrication oil is removed at 87-III, the final residue being removed at 92.

CLAIMS:

1.  A method for the evaporative heat-treatment of a liquid in order to separate therefrom a single component or a fraction comprising one or more components wherein a stream of liquid is injected into a vessel at reduced pressure for removal and condensation of vapour from the top of the vessel and of unevaporated liquid from the base of the vessel, characterised in that it comprises:-

(a) providing at least one heated stream of the liquid;

(b) feeding the or each heated stream (3, 22, 33, 54) so as to impinge as a coherent or atomised stream 49 generally tangentially on a conical or cylindrical upper portion of an internal wall of a vessel (2, 24, 32, 51, 81) held at reduced pressure, the said wall being at a controlled temperature (5, 35, 52), preferably at a temperature higher than that of the stream of liquid, whereby (i) flash evaporation of at least part of the liquid takes place on entry to the vessel and (ii) further evaporation takes place as the liquid runs around and down the conical or cylindrical portion;

(c) providing a baffled large-diameter axial outlet (9,12:34,40:61:74) also at the upper portion of the vessel, into which at least the flash-evaporated vapour can force itself;

(d) condensing this vapour to the desired component within a large-diameter condenser system (6, 25, 41, 64, 85) of consequentially large condensing surface area; and

(e) allowing residual liquid to flow downwards on the vessel walls to accumulate for removal from the bottom of the vessel (7, 36, 72).

2. A method as claimed in claim 1 characterised in that at least part of the residual liquid after removal from the bottom of the vessel is heated (20, 38, 57, 83) and thereafter used to preheat the or each stream of liquid entering the vessel.

3. A method as claimed in claim 2 characterised in that heated residual liquid is mixed to form a component part of the feed liquid, in a proportion of 70% to 95% by volume of the total (21, 39, 50, 59).

4. A method as claimed in claim 2 or 3 characterised in that the residual liquid is mixed (50) close to the or each inlet in a nozzle member (46) providing good internal mixing and/or a rotary component (48) whereby the feed is rapidly heated to avoid thermal decomposition.

5. A method as claimed in claim 3 or 4 characterised in that residual liquid is fed for preheat from the body of liquid accumulated in the vessel (7, 36, 72) in an amount dependent on the depth of the said body, whereby if the liquid level falls less preheat is given and a compensatory amount of residual liquid arrives at the base of the vessel.

6. A method as claimed in claim 5 characterised in that residual liquid is withdrawn from the body of liquid by a vertical pipe perforated at intervals (31), whereby progressively fewer perforations are used as the liquid level falls.

7. A method as claimed in any one preceding claim characterised in that the vapour passing through the axial outlet (9) thereafter passes downwards through a thermally insulated internal condenser system (6).

8. A method as claimed in any one of claims 1 to 6 characterised in that the vapour passing through the axial outlet (40, 61, 74) thereafter passes upwards through an external condenser system (41, 64).

9. A method as claimed in any one preceding claim characterised in that the reduced pressure in the vessel is from 1 to 10 mm Hg.

10. A method as claimed in any one preceding claim characterised in that two, three, or four streams of entering liquid are used.

11. A method as claimed in any one preceding claim, characterised in that the upper portion of the walls is heated.

12. A method as claimed in any one preceding claim characterised in that at least the upper portion of the vessel is conical in shape.

13. Equipment for carryig out the method claimed in claim 1, characterised in that it comprises:

a vessel (2, 24, 32, 51, 81) with a large-diameter axial outlet (9, 40, 61, 74) at an upper portion thereof, and having a conical or cylindrical upper portion of the vessel internal wall;

temperature control means (5, 35, 52) surrounding and providing a controllable temperature at the said wall upper portion;

one or more nozzles (3, 22, 33, 54) to provide a coherent or atomised stream (49) of liquid oriented to impinge generally tangentially on the said wall upper portion;

a baffle system (12, 34) between the said wall upper portion and the axial outlet;

a large-diameter condenser system (6, 41, 64) of consequentially large condenser surface area, attached to the vessel axial outlet; and

a vacuum pump (15, 29, 67, 89) attached to the condenser.

14. Equipment as claimed in claim 15 characterised in that it further comprises ducting (17; 37, 38; 56, 57) placing the vessel in communication with the or each nozzle to provide recycled preheat liquid thereat.

15. A multistage assembly of equipment as claimed in claim 14 characterised in that ducting (88) places a base liquid outlet, separate from the recycle liquid outlet, into communication with the liquid feed nozzle of a subsequent stage.

FIG.1.

FIG.2.

FIG.3.

FIG.4.

FIG.5.

FIG.6.

FIG.7.

FIG. 8.

FIG. 9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | GB-A- 636 324 (S.G. DEHN) * Page 2, lines 20-43; page 3, lines 21-63; page 4, lines 125-130; page 7, lines 59-114; figures 3,6,8,10 * | 1,13 | B 01 D 3/06 B 01 D 1/30 B 01 D 5/00 C 10 M 11/00 |
| | --- | | |
| Y | US-A-4 158 092 (F. BÖTSCH) * Column 10, lines 25-49; figures 2,5 * | 1,2,13 | |
| A | | 10,11, 14 | |
| | --- | | |
| Y | DE-C- 695 202 (BERGEDORFER EISENWERK) * Page 1, line 46 - page 2, line 44; figure * | 1,2,13 | **TECHNICAL FIELDS SEARCHED (Int. Cl. 3)** |
| | --- | | |
| A | GB-A-1 467 570 (KAO SOAP CO.)  * Whole document * | 1,2,4, 5,8,13 ,14 | B 01 D C 02 F C 10 M |
| | --- | | |
| A | US-A-2 994 647 (W.R. WILLIAMSON) * Column 2, line 12 - column 4, line 63; figure * | 1,7 | |
| | ----- | | |

| | | |
|---|---|---|
| The present search report has been drawn up for all claims | | |
| Place of search THE HAGUE | Date of completion of the search 06-06-1984 | Examiner VAN BELLEGHEM W.R. |